# EUROPEAN PATENT APPLICATION

(11) **EP 4 787 864 A1**
(43) Date of publication of application: **05.08.2026**
(21) Application number: 24873143.2
(22) Date of filing: 24.09.2024
(51) Int. Cl.: H04N 21/239, H04N 21/218, H04N 21/478

(54) **DISPLAYING METHOD AND APPARATUS, TRANSMISSION METHOD AND APPARATUS, ELECTRONIC DEVICE, MEDIUM, AND PRODUCT**

(30) Priority: 28.09.2023 CN 202311284064
(71) Applicant: Lemon Inc., Grand Cayman, KY1-1205 (KY)
(72) Inventor: DONG, Shiwei, Beijing 100028 (CN)
(74) Representative: Grünecker Patent- und Rechtsanwälte PartG mbB
(86) International application number: PCT/SG2024/050620
(87) International publication number: WO 2025/071486

(57) **Abstract**

Embodiments of the disclosure provide a method, apparatus, electronic device, medium and product for displaying and sending. The method includes: receiving a request display operation of a first user in a live streaming interface, the first user being a streamer of a live streaming room corresponding to the live streaming interface. In response to the request display operation and based on whether virtual object information corresponding to a plurality of interaction requests received by the first user meets a predetermined condition, the plurality of interaction requests is displayed in a request list respectively. The method displays the interaction request received by the first user in the request list respectively based on whether the user sending the interaction request meets the predetermined condition. Therefore, the display flexibility of the interaction request is improved, the efficiency of the streamer processing the request is improved, and convenience is provided for the streamer interacting with the user which meets the predetermined condition.

## Description

### CROSS-REFERENCE

The present application claims priority to Chinese Patent Application No. 2023112840644, filed on September 28, 2023, entitled "METHOD, APPARATUS, ELECTRONIC DEVICE, MEDIUM AND PRODUCT FOR DISPLAYING AND SENDING," the entirety of which is incorporated herein by reference.

### FIELD

Embodiments of the present disclosure relate to a field of computer technologies, and in particular, to a method, apparatus, electronic device, medium and product for displaying and sending.

### BACKGROUND

With the rapid development of technology, more and more live streamers are performing live streaming through video software.

In order to increase interactivity between the streamer and the audience, the current audience may send an interaction request to a streamer side, and the streamer side may select, through a request list, a corresponding audience to interact with. However, the current way for displaying a request is relatively monotonous, and steps for the streamer to interact with the audience are cumbersome.

### SUMMARY

The embodiments of the present disclosure provide a method, apparatus, electronic device, medium and product for displaying and sending.

According to a first aspect, the embodiments of the present disclosure provide a method for displaying a request, including: receiving a request display operation of a first user in a live streaming interface, the first user being a streamer of a live streaming room corresponding to the live streaming interface; and displaying, in response to the request display operation and based on whether virtual object information corresponding to a plurality of interaction requests received by the first user meets a predetermined condition, the plurality of interaction requests in a request list respectively.

According to a second aspect, the embodiments of the present disclosure provide a method for sending a virtual object, including: displaying, in response to a panel display operation of a second user in a live streaming interface, a predetermined panel in the live streaming interface, virtual object information corresponding to an interaction request sent by the second user not meeting a predetermined condition, the predetermined panel being configured to display object information of a virtual object to be sent, and the virtual object to be sent being a virtual object to be sent which meets the predetermined condition; and sending the virtual object to be sent, in response to a sending operation applied on the predetermined panel.

According to a third aspect, the embodiments of the present disclosure further provide an apparatus for displaying a request, including: a receiving module configured to receive a request display operation of a first user in a live streaming interface, the first user being a streamer of a live streaming room corresponding to the live streaming interface; and a first display module configured to display, in response to the request display operation and based on whether virtual object information corresponding to a plurality of interaction requests received by the first user meets a predetermined condition, the plurality of interaction requests in a request list respectively.

According to a fourth aspect, the embodiments of the present disclosure further provide an apparatus for sending a virtual object, including: a second display module configured to display, in response to a panel display operation of a second user in a live streaming interface, a predetermined panel in the live streaming interface, virtual object information corresponding to an interaction request sent by the second user not meeting a predetermined condition, the predetermined panel being configured to display object information of a virtual object to be sent, and the virtual object to be sent being a virtual object to be sent which meets the predetermined condition; and a sending module configured to send the virtual object to be sent, in response to a sending operation being applied on the predetermined panel.

According to a fifth aspect, the embodiments of the present disclosure further provide an electronic device, including: one or more processors; a memory, configured to store one or more programs, where the one or more programs, when executed by the one or more processor, cause the one or more processors to implement the method for displaying a request or the method for sending a virtual object according to the embodiments of the present disclosure.

According to a sixth aspect, the embodiments of the present disclosure further provide a computer-readable storage medium, having a computer program stored thereon, where the program, when executed by a processor, implements the method for displaying a request or the method for sending a virtual object according to the embodiments of the present disclosure.

According to a seventh aspect, the embodiments of the present disclosure further provide a computer program product, where the computer program product, when executed by a computer, causes the computer to implement the method for displaying a request or the method for sending a virtual object according to the embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and components and elements are not necessarily drawn to scale.
FIG. 1 is a schematic flowchart of a method for displaying a request according to an embodiment of the present disclosure;
FIG. 2 is a schematic diagram of a request list according to an embodiment of the present disclosure;
FIG. 3 is a schematic diagram of a setting item according to an embodiment of the present disclosure;
FIG. 4 is a schematic flowchart of a method for sending a virtual object according to an embodiment of the present disclosure;
FIG. 5 is a schematic diagram of a predetermined panel according to an embodiment of the present disclosure;
FIG. 6 is a schematic structural diagram of an apparatus for displaying a request according to an embodiment of the present disclosure;
FIG. 7 is a schematic structural diagram of an apparatus for sending a virtual object according to an embodiment of the present disclosure;
FIG. 8 is a schematic structural diagram of an electronic device according to an embodiment of the present disclosure.

### DETAILED DESCRIPTION

Embodiments of the present disclosure will be described in more detail below with reference to the accompanying drawings. Although some embodiments of the present disclosure are shown in the accompanying drawings, it should be understood that the present disclosure may be implemented in various forms, and should not be interpreted as limited to embodiments set forth herein, on the contrary, these embodiments are provided for a more thorough and complete understanding of the present disclosure. It should be understood that the drawings and embodiments of the present disclosure are merely for example purposes and are not intended to limit the scope of the present disclosure.

It should be understood that steps recited in method embodiments of the present disclosure may be performed in different orders, and/or performed in parallel. Further, the method embodiments may include additional steps and/or omit performing the illustrated steps. Scope of the present disclosure is not limited in this respect.

As used herein, the term "comprising" and its variations are open, i.e., "comprising but not limited to". The term "based on" is "based at least in part on". The term "one embodiment" means "at least one embodiment"; the term "a further embodiment" means "at least one further embodiment"; the term "some embodiments" means "at least some embodiments". The relevant definitions of other terms will be given below.

It should be noted that the concepts such as "first" and "second" mentioned in this disclosure are merely configured to distinguish different apparatuses, modules, or units, and are not intended to limit the order of functions performed by the apparatuses, modules, or units or mutual dependency relationships of the apparatuses, modules, or units.

It should be noted that the modifiers "a" and "a plurality of" mentioned in this disclosure is illustrative rather than limiting, and those skilled in the art should understand that the modifiers should be understood as "one or more" unless otherwise explicitly indicated in the context.

Names of messages or information interacted between a plurality of apparatuses in the embodiments of the present disclosure are for illustrative purposes only and are not intended to limit the scope of such messages or information.

It can be understood that, before technical solutions disclosed in the embodiments of the present disclosure are used, types, usage scopes, usage scenarios and the like of personal information related to the present disclosure should be informed to the user and obtain user authorization in an appropriate manner according to relevant laws and regulations.

For example, in response to receiving an active request from a user, prompt information is sent to the user to explicitly prompt the user that the operation requested to perform will need to acquire and use the personal information of the user. Therefore, the user can autonomously select whether to provide personal information to software or hardware such as electronic devices, application programs, servers and storage media which execute the operation of the technical solution of the present disclosure according to the prompt information.

As an optional but non-limiting implementation, in response to receiving the active request of the user, a manner of sending the prompt information to the user may be, for example, a pop-up window, and prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process are merely illustrative, and do not constitute a limitation on implementations of the present disclosure, and other manners which meet related laws and regulations may also be applied to implementations of the present disclosure.

The embodiments of the present disclosure provide a method, apparatus, electronic device, medium and product for displaying and sending, to improve display flexibility of the interaction request, and help the streamer improve the efficiency of processing a request.

The embodiment of the present disclosure provides a method, apparatus, electronic device, medium and product for displaying and sending, and the method includes: receiving a request display operation of a first user in a live streaming interface, the first user being a streamer of a live streaming room corresponding to the live streaming interface; and displaying, in response to the request display operation and based on whether virtual object information corresponding to a plurality of interaction requests received by the first user meets a predetermined condition, the plurality of interaction requests in a request list respectively. With the above technical solution, the interaction request received by the first user is displayed in a request list respectively based on whether the user sending the interaction request meets the predetermined condition, the display flexibility of the interaction request is improved, the efficiency of the streamer processing the request is improved, and convenience is provided for the streamer interacting with the user which meets the predetermined condition.

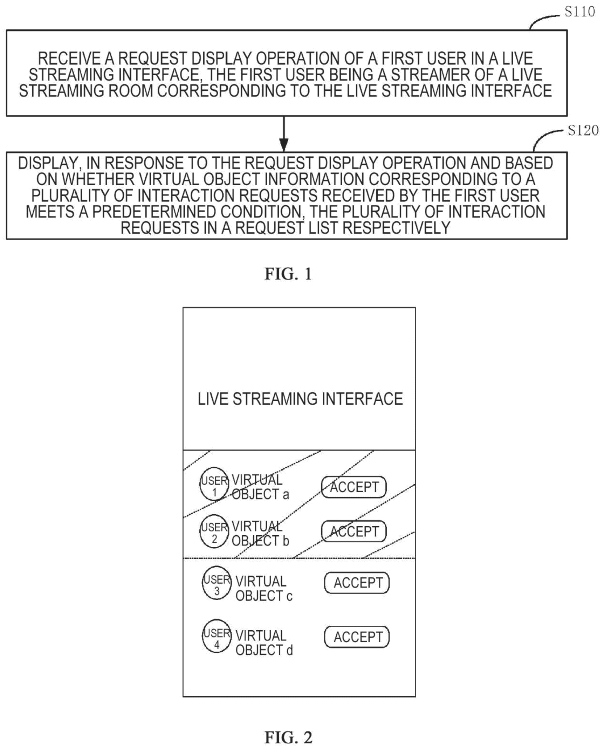

FIG. 1 is a schematic flowchart of a method for displaying a request according to an embodiment of the present disclosure. The method may be applicable to a case in which a request for a live streaming room streamer is displayed. The method may be performed by an apparatus of the method for displaying a request, where the apparatus may be implemented by software and/or hardware and the apparatus is generally integrated on an electronic device. In this embodiment, the electronic device includes but is not limited to a device such as a computer, a mobile phone, or a tablet computer.

As shown in FIG. 1, a method for displaying a request provided by the embodiments of the present disclosure includes:
S110: receive a request display operation of a first user in a live streaming interface, the first user being a streamer of a live streaming room corresponding to the live streaming interface.

The first user may refer to a streamer of a live streaming room corresponding to the live streaming interface, for example, the streamer may perform live streaming in the live streaming room corresponding to the live streaming interface. There may be other users in the live streaming room, such as a host, a guest or an audience. The request display operation may be considered as an operation that the first user requests to display the request list.

In this step, after the first user performs the request display operation in the live streaming interface, a current application program may receive this request display operation. Therefore, the request display operation may be responded to, and subsequent display steps may be performed. The specific content of the request display operation in this embodiment is not limited. For example, the request display operation may be an operation of triggering to click on a certain control, or an operation of performing a predetermined gesture on the live streaming interface. The predetermined gesture may be a gesture determined in advance, for example, a predetermined gesture may be a gesture for drawing circles.

S120, display, in response to the request display operation and based on whether virtual object information corresponding to a plurality of interaction requests received by the first user meets a predetermined condition, the plurality of interaction requests in a request list respectively.

The interaction request may be configured to request interaction with the first user. The specific content of the interaction request is not limited. For example, the interaction request may be a request for interacting with the streamer requested by a live streaming room audience or a guest. For example, the interaction request may be a connection request, an explanation request, and/or a singing request and the like. There may be a plurality of interaction requests from different users. In this embodiment, the interaction request may be an interaction request received by the streamer and that has not been processed yet. That is, the request list may be a list formed by a plurality of interaction requests that are received by the first user and request interaction with the first user. Specifically, the request list may be a list of interaction requests that have not been processed yet. Correspondingly, the interaction request that has been processed may be moved out of the request list. The request list may include identification information (such as avatar information) of a sender (initiator) of the interaction request and an acceptance control for accepting the interaction request.

The virtual object information may be information of the virtual object, for example, the virtual object information may include a type of the virtual object. The predetermined condition may be a condition determined in advance. The predetermined condition may be preconfigured by a related person. The predetermined condition may be associated with the virtual object information, for example, the predetermined condition may be a number of the virtual objects reaches a predetermined number, or the predetermined condition may be a type of the virtual object is a predetermined type. The specific content of the interaction request and the predetermined condition may be determined according to actual conditions.

In an embodiment, the interaction request is a connection request. The virtual object information is information of virtual objects which have been sent in the live streaming room by a user sending the interaction request. The virtual object information includes a sending number of virtual objects that have been sent. The predetermined condition includes that the sending number of the virtual objects that have been sent corresponding to the interaction request reaches a predetermined number. The virtual objects that have been sent include a virtual resource and/or a virtual item.

In this embodiment, the interaction request may be a connection request, for example, a request for applying to connect with the streamer. The interaction request may also be a request other than a connection. The virtual object information may be information of virtual objects which have been sent in the live streaming room by a user sending the interaction request, for example, the virtual object information may include the number of the virtual objects that have been sent. The predetermined condition may include that the sending number of the virtual objects that have been sent corresponding to the interaction request reaches a predetermined number. The virtual objects that have been sent may include, for example, a virtual resource and/or a virtual item. The virtual resource may refer to a resource that is virtual, and the virtual resource may be used to exchange a corresponding resource, for example, the virtual resource may be a coupon. The virtual item may be a predetermined virtual item, such as a virtual gift and the like. The virtual resource and the virtual item may be converted to a resource in real life. The predetermined number may be automatically configured by a server, or may be customized by the first user. For example, the predetermined number may be set according to actual conditions.

Specifically, after receiving the request display operation of the first user, this embodiment may display the plurality of interaction requests respectively in response to the request display operation. Specifically, the plurality of interaction requests is displayed in the request list respectively based on whether the virtual object information corresponding to each of the plurality of interaction requests received by the first user meets a predetermined condition. For example, in the request list, based on whether the virtual object information corresponding to the user sending the interaction request meets a predetermined condition, the corresponding interaction request may be displayed differently. The specific display mode is not limited, as long as different interaction requests can be displayed separately. Whether the virtual object information corresponding to the plurality of interaction requests meets a predetermined condition. Specifically, for each interaction request, whether the virtual object information corresponding to the interaction request meets the predetermined condition may be determined based on the information of virtual objects which have been sent in the live streaming room by the user sending each interaction request.

In an embodiment, the plurality of interaction requests includes a first interaction request and a second interaction request. If the virtual object information corresponding to the first interaction request meets the predetermined condition, and the virtual object information corresponding to the second interaction request does not meet the predetermined condition, the first interaction request and the second interaction request have different display priorities and/or different display styles in the request list.

In one embodiment, different interaction requests may be distinguished according to different users. For example, the plurality of interaction requests may include a first interaction request and a second interaction request, the virtual object information corresponding to the first interaction request may meet a predetermined condition, and the virtual object information corresponding to the second interaction request does not meet the predetermined condition. Further, the first interaction request and the second interaction request may have different display manners in the request list. For example, the first interaction request and the second interaction request may have different display priorities and/or different display styles in the request list. For example, a display priority of the first interaction request may be higher than a display priority of the second interaction request, or a display order of the first interaction request may be prioritized over the second interaction request. Alternatively, in this embodiment, the first interaction request may be displayed on top of the request list. In addition, the first interaction request and the second interaction request may also have different display styles. For example, a color, a size, or a format of the display may be different. For example, the first interaction request may be highlighted.

Further, the first interaction request or the second interaction request may be displayed according to a setting logic. The setting logic may include sorting according to a relationship between a sending user and the streamer, or sorting according to a first letter of a user name, and the like.

FIG. 2 is a schematic diagram of a request list according to an embodiment of the present disclosure. As shown in FIG. 2, it is assumed that the virtual object information is a number of virtual objects. The predetermined condition includes that a sending number of the virtual objects that have been sent corresponding to the interaction request needs to reach m. The virtual object information corresponding to the interaction request of a user 1, the interaction request of a user 2, the interaction request of a user 3, and the interaction request of a user 4 is a, b, c and d respectively, where a and b are greater than m, c and d are less than m. That is, the virtual object information corresponding to the interaction request of the user 1 and the interaction request of the user 2 has met the predetermined condition, and the virtual object information corresponding to the interaction request of the user 3 and the interaction request of the user 4 does not meet the predetermined condition. In this case, the first interaction request sent by the user 1 and the first interaction request sent by the user 2 may be displayed on top of the request list, and the first interaction request has a different display style from the second interaction request sent by the user 3 and the second interaction request sent by the user 4. A, b, c, d and m may be positive integers.

According to the method for displaying a request provided by the embodiments of the present disclosure, a request display operation of a first user in a live streaming interface is received, and the first user is a streamer of a live streaming room corresponding to the live streaming interface. In response to the request display operation and based on whether virtual object information corresponding to a plurality of interaction requests received by the first user meets a predetermined condition, the plurality of interaction requests is displayed in a request list respectively. With this method, the interaction request received by the first user is displayed in a request list respectively based on whether the user sending the interaction request meets the predetermined condition. Therefore, the display flexibility of the interaction request is improved, the efficiency of the streamer processing the request is improved, and convenience is provided for the streamer interacting with the user which meets the predetermined condition.

In an embodiment, a display priority of the first interaction request is higher than a display priority of the second interaction request, and the method further includes: adding a new interaction request to the request list in response to receiving the new interaction request, the new interaction request being a first interaction request.

In this embodiment, the display priority of the first interaction request may be higher than the display priority of the second interaction request. For example, a new first interaction request may be added to the request list in response to receiving the new first interaction request. The means for adding is not limited. For example, the new first interaction request may be directly added to the request list, or the interaction request originally included in the request list may be adjusted according to the number of interaction requests in the request list, to add the new first interaction request to the request list. For example, a certain interaction request originally included in the request list may be selected, and the selected interaction request is replaced with the new first interaction request. The rule for selecting is not limited, for example, may be randomly selected, or may be selected according to a size of a number of the virtual objects sent by the user.

In an embodiment, adding the new interaction request to the request list includes: adding the new interaction request to the request list by keeping an interaction request originally included in the request list unchanged. Or a target interaction request is deleted from the request list, and the new interaction request is added to the request list. The target interaction request is a second interaction request.

The target interaction request may be the second interaction request. For example, the second interaction request may be randomly selected from the request list as the target interaction request. The target interaction request may also be selected according to the size of the number of the virtual object sent by the user corresponding to the second interaction request. For example, the target interaction request may be a second interaction request with an earliest sending time. Alternatively, the target interaction request may be a last interaction request arranged in a target display mode.

In one embodiment, an upper limit may be set for the interaction requests in the request list. For example, the request list may display Z interaction requests at most. If the interaction requests originally included in the current request list do not reach Z, a new interaction request is received. In this case, the new interaction request may be directly added to the request list by keeping the interaction request originally included in the request list unchanged. Z may be a certain value set by the actual interface condition.

In one embodiment, if the interaction requests originally included in the current request list have reached the upper limit value. When a new interaction request is received, the target interaction request may be deleted from the request list, and the new interaction request may be added to the request list.

Furthermore, the present embodiment may not set an upper limit for the interaction requests in the request list. As long as a new interaction request is received, the new interaction request may be directly added to the request list by keeping the interaction request originally included in the request list unchanged.

In an embodiment, the method further includes: displaying, on the live streaming interface, first prompt information prompting that there is a first interaction request to be checked, in response to the request list including the first interaction request to be checked. Second prompt information prompting that there is a second interaction request to be checked is displayed on the live streaming interface, in response to the request list including the second interaction request to be checked but excluding the first interaction request.

The first prompt information may be configured to prompt that there is a first interaction request to be checked and the second prompt information may be configured to prompt that there is a second interaction request to be checked. Specific contents of the first prompt information and the second prompt information are not limited. For example, the first prompt information and the second prompt information may prompt in a form of text, or may also be in a form of a symbol, a graphic, or a pattern. Further, the first prompt information and the second prompt information may have different display styles. The first prompt information and the second prompt information may also prompt in different forms.

In an embodiment, the first prompt information is further configured to prompt number information of first interaction requests to be checked.

In an embodiment, the first prompt information may prompt the first interaction request in a form of a digital red dot. For example, when there are 2 first interaction requests to be checked in the request list, the first user may be prompted in a form of a number 2 and a red point in the live streaming interface that there are 2 first interaction requests to be checked in the request list. When there is no first interaction request to be checked in the request list and there is a second interaction request to be checked, the first user may be prompted in a form of a red point in the live streaming interface that there is a second interaction request to be checked in the request list.

In an embodiment, before receiving a list display operation of the first user in a live streaming interface, the method further includes at least one of: displaying, in response to a condition setting operation, a setting item of the predetermined condition for the first user to set the predetermined condition. In response to a display mode setting operation, a display mode of the interaction request in the request list is set to a target display mode. In the target display mode, the interaction requests received by the first user are displayed separately based on whether virtual object information corresponding to the respective interaction requests meets a predetermined condition.

In this embodiment, the condition setting operation may be configured to display a setting item of the predetermined condition, for example, the condition setting operation may be an operation of clicking a setting control. The position and form of the setting control in the live streaming interface are not limited herein. The setting item may be configured for the first user to set the predetermined condition. For example, the setting item may include a plurality of options for the first user to set the predetermined condition.

The display mode setting operation may be configured to set the display mode of the interaction request in the request list, as this embodiment, the display mode of the interaction request may be managed through opening or closing a certain target control. For example, the display mode setting operation may be an operation of clicking the target control to switch the target control from a closed state to an opened state. Correspondingly, at this time the display mode of the interaction request in the request list may be the target display mode, and the target display mode may be a display mode determined in advance. For example, in the target display mode, the interaction requests received by the first user may be displayed separately based on whether the virtual object information corresponding to the respective interaction requests meets the predetermined condition. On the other hand, when the target control is clicked to switch the target control from the opened state to the closed state, the display mode of the interaction request in the request list may not be the target display mode. That is, the interaction requests received by the first user may not be displayed separately based on whether the virtual object information corresponding to the respective interaction requests meets the predetermined condition. For example, the first interaction request and the second interaction request may be mixed in the request list, and the display mode of the first interaction request and the second interaction request may be the same, and the specific display mode may not be limited.

In an embodiment, before receiving the list display operation of the first user in the live streaming interface, the first user may customize related information of the request list. For example, the first user may perform a condition setting operation. The current application program may display the setting item of the predetermined condition in response to the condition setting operation, so that the first user sets the predetermined condition. The specific process of setting the predetermined condition is not limited herein.

The first user may also perform a display mode setting operation. The current application program may in response to the display mode setting operation, set the display mode of the interaction request in the request list to the target display mode. On this basis, the setting of the interaction request display mode may be realized.

In an embodiment, the setting item includes at least one candidate condition and/or a condition input control. After displaying the setting item of the predetermined condition, the method further includes at least one of: setting, in response to a first triggering operation applied to the candidate condition, the candidate condition to which the first triggering operation is applied as the predetermined condition. A condition input area is displayed in response to a second triggering operation applied to the condition input control. The condition input area is configured for the first user to input the predetermined condition.

The settings item may include at least one candidate condition and/or a condition input control. A candidate condition may be a plurality of selectable items provided by the current application program for the first user, for the user to select from the selectable items, and the selected item is directly set as the predetermined condition. The condition input control may be configured to display a condition input area for the first user to input the predetermined condition. The condition input area may be configured for the first user to input the predetermined condition, for example, the condition input area may include an input box and an input keyboard.

The first triggering operation may refer to a triggering operation applied to the candidate condition, and the second triggering operation may refer to a triggering operation applied to the condition input control. The first triggering operation and the second triggering operation are only configured to distinguish different objects to apply, and this embodiment does not limit other information of the first triggering operation and the second triggering operation.

Specifically, after displaying the setting item of the predetermined condition, the predetermined condition may be set in different manners. For example, a first user may perform a first triggering operation applied to the candidate condition. The current application program may set, in response to the first triggering operation, the candidate condition to which the first triggering operation is applied as the predetermined condition. The first user may also perform a second triggering operation applied to the condition input control. The current application may display the condition input area in response to the second triggering operation. In this way, the first user may set the predetermined condition by inputting the predetermined condition through the condition input area.

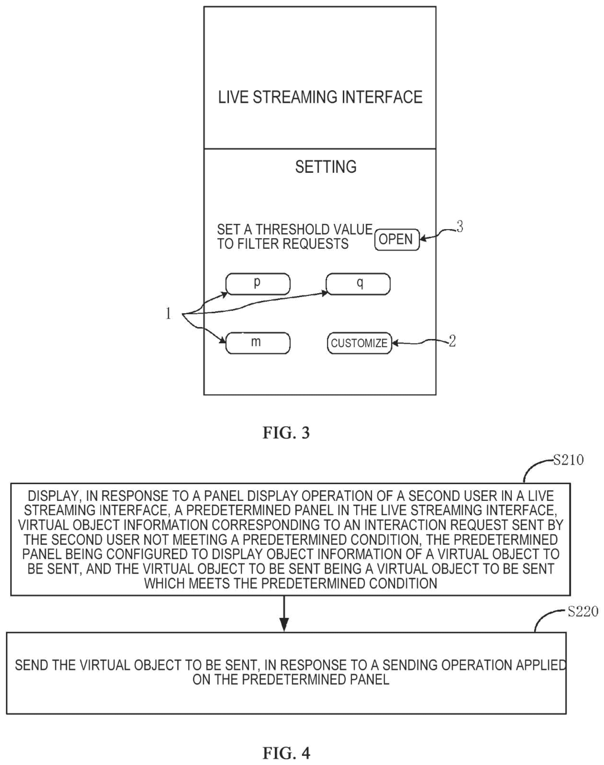

FIG. 3 is a schematic diagram of a setting item according to an embodiment of the present disclosure. As shown in FIG. 3, the setting item may include three candidate conditions 1 (that is, the sending number of virtual objects that have been sent is p, q, and m) and a condition input control 2 (that is, a customize control). The first user may set the candidate condition to which the first triggering operation is applied as the predetermined condition through a first triggering operation applied to the candidate condition 1. The first user may also display the condition input area for the first user to input the predetermined condition through a second triggering operation applied to the condition input control 2. P, q and m may be different values, and the specific value is not limited.

In addition, the first user may also open the control 3 through clicking, that is, the display mode setting operation may be performed. In this embodiment, the display mode of the interaction request in the request list may be set to the target display mode, that is, the interaction requests received by the first user are displayed separately based on whether the user sending the interaction request meets the predetermined condition.

FIG. 4 is a schematic flowchart of a method for sending a virtual object according to an embodiment of the present disclosure. The method may be applicable to a case in which a virtual object is sent, and the method may be performed by an apparatus for sending a virtual object. The apparatus for sending the virtual object may be implemented by software and/or hardware, and the apparatus is generally integrated on an electronic device. In this embodiment, the electronic device includes but is not limited to a device such as a computer, a mobile phone, or a tablet computer.

The streamer notifies the audience mainly through a green screen, a live streaming room introduction and the like that the audience needs to send a virtual object for connecting. At the same time, the streamer can only be perceived through gift trays and special effects. If there is a time difference between the sending of the virtual object and the application for requesting, the streamer is easy to forget. In addition, currently only value of a single virtual object can be counted, and a case exists in which a user who sends virtual objects several times to reach the same value is ignored. Based on this, an embodiment of the present disclosure provides a method for sending a virtual object. As shown in FIG. 4, the method includes the following steps:
S210: display, in response to a panel display operation of a second user in a live streaming interface, a predetermined panel in the live streaming interface. Virtual object information corresponding to an interaction request sent by the second user has not met a predetermined condition. The predetermined panel is configured to display object information of a virtual object to be sent. The virtual object to be sent is a virtual object to be sent which meets the predetermined condition.

It may be noted that a user in a live streaming room may be classified into a streamer, a guest, and an audience. In a connection scenario, the guest may refer to a user that is connecting to the streamer. The audience may refer to a user that is not connected to the streamer, that is, a second user. In some scenarios, the second user may include an audience, or the second user may include other users other than the audience, such as guests. In this embodiment, the second user may be a user whose virtual object information corresponding to the interaction request that has been sent has not met the predetermined condition of the live streaming interface.

The panel display operation may be configured to display the predetermined panel, and the object information of the virtual object to be sent may be displayed in the predetermined panel. The virtual object to be sent may refer to a virtual object to be sent which meets the predetermined condition, for example, the virtual object to be sent is a virtual object to be sent which can meet the predetermined condition after being sent by the second user. For example, the virtual object to be sent may be distinguished based on different predetermined conditions. For example, the virtual object information may include a sending number of the virtual objects that have been sent. The predetermined condition may include that a sending number of the virtual objects that have been sent corresponding to the interaction request reaches a predetermined number. When the virtual objects that have been sent are virtual resources, the virtual objects to be sent are virtual resources and/or virtual items. Furthermore, the virtual objects that have been sent and the virtual objects to be sent may be virtual items. That is, when the predetermined condition is that a sending number of virtual resources that have been sent corresponding to the interaction request reaches a predetermined number and the virtual objects that have been sent are virtual resources, the virtual objects to be sent may be virtual resources and/or virtual items. When the predetermined condition is that a sending number of virtual items that have been sent corresponding to the interaction request reaches a predetermined number and the virtual objects that have been sent are virtual items, the virtual objects to be sent may be virtual items.

Further, a specific value or number of the virtual objects to be sent is not limited. For example, the virtual object to be sent may be a virtual item that enables the second user to meet a predetermined condition and has a minimum value, or may be a virtual resource that enables the second user to meet a predetermined condition and has a minimum number. In addition, the virtual object to be sent may further include virtual items that enable the second user to meet a predetermined condition and have different values. The object information may be information of a virtual object to be sent, for example, a name, an icon, and/or a number of the virtual object to be sent.

S220, send the virtual object to be sent, in response to a sending operation applied on the predetermined panel.

The sending operation may be, for example, an operation of clicking a sending control. Specifically, in this embodiment, in response to the panel display operation of the second user in the live streaming interface, the predetermined panel is displayed in the live streaming interface to display the object information of the virtual object to be sent to the second user. The second user may select whether to send the virtual object to be sent according to their willingness. When the sending operation applied on the predetermined panel by the second user is identified, this embodiment may trigger the sending of the virtual object to be sent in response to the sending operation.

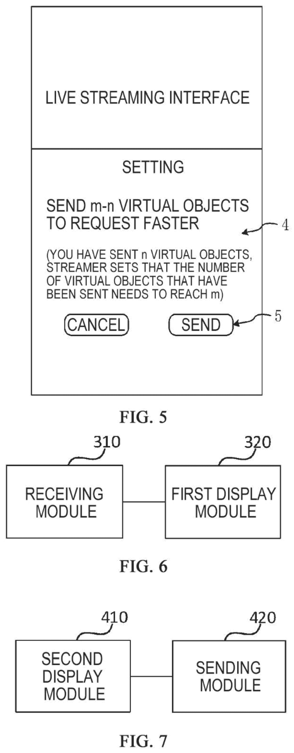

FIG. 5 is a schematic diagram of a predetermined panel according to an embodiment of the present disclosure. As shown in FIG. 5, when a user has not met a predetermined condition corresponding to a live streaming interface, a predetermined panel may be displayed in response to a panel display operation of the user (that is, a second user) in the live streaming interface. The predetermined panel may display an object information 4 of a virtual object to be sent, that is, "Send m-n virtual objects to request faster; you have sent n virtual objects, the streamer sets that the number of virtual objects that have been sent needs to reach m", and m is greater than n. Further, the second user may select to trigger a sending control 5 to perform the sending operation, thereby sending the virtual object to be sent.

According to the method for sending a virtual object provided by the embodiments of the present disclosure, the predetermined panel is displayed in the live streaming interface in response to the panel display operation of the second user in the live streaming interface, the virtual object information corresponding to the interaction request sent by the second user does not meet the predetermined condition, the predetermined panel is configured to display the object information of the virtual object to be sent, and the virtual object to be sent is the virtual object to be sent which meets the predetermined condition. The virtual object to be sent is sent in response to the sending operation applied on the predetermined panel. With the method, the object information of the virtual object to be sent is displayed in the live streaming interface in response to the panel display operation in the live streaming interface of the user that does not meet the predetermined condition corresponding to the live streaming interface, so that the user can achieve the predetermined condition by triggering the sending operation for the virtual object to be sent, and the operation required by the user to achieve the predetermined condition can be simplified.

In one embodiment, the panel display operation includes a request sending operation. Displaying the predetermined panel in the live streaming interface includes: sending an interaction request to a streamer of the live streaming interface, and displaying the predetermined panel in the live streaming interface.

The request sending operation may be configured to send an interaction request, for example, the request sending operation may be an operation of applying a connection.

In an embodiment, if the second user performs a request sending operation, the embodiment may send the interaction request to the streamer of the live interface, and display the predetermined panel in the live streaming interface. For example, after the second user performs the request sending operation, the predetermined panel may be popped up in the live streaming interface. In this way, the purpose of notifying the second user that the application is successful is achieved. Meanwhile, object information of the virtual object to be sent that can meet the predetermined condition after being sent by the second user is displayed.

In an embodiment, when the user that has met the predetermined condition corresponding to the live streaming interface performs the request sending operation, this embodiment may send only the interaction request, and do not display the predetermined panel. For example, the application panel may continue to be displayed.

Through the method displaying a request and the method for sending a virtual object provided by the embodiment of the present disclosure, the streamer can be helped to convey an interaction threshold to the user. By supporting the streamer to set the interaction threshold, the streamer is helped to guide the user that does not reach the threshold to exceed the threshold by sending the virtual object when the user applies. The current request display mode is enriched, and the viscosity between the streamer and the user can be better enhanced.

FIG. 6 is a schematic structural diagram of an apparatus for displaying a request according to an embodiment of the present disclosure.

As shown in FIG. 6, the apparatus includes: a receiving module 310 configured to receive a request display operation of a first user in a live streaming interface, the first user being a streamer of a live streaming room corresponding to the live streaming interface; and a first display module 320 configured to display, in response to the request display operation and based on whether virtual object information corresponding to a plurality of interaction requests received by the first user meets a predetermined condition, the plurality of interaction requests in a request list respectively.

According to the apparatus for displaying a request provided by the embodiments of the present disclosure, the request display operation of the first user in the live streaming interface is received through the receiving module, and the first user is the streamer of the live streaming room corresponding to the live streaming interface; and in response to the request display operation and based on whether the virtual object information corresponding to the plurality of interaction requests received by the first user meets the predetermined condition, the plurality of interaction requests are displayed in the request list respectively through the first display module. With this apparatus, the interaction request received by the first user is displayed in a request list respectively based on whether the user sending the interaction request meets the predetermined condition, the display flexibility of the interaction request is improved, the efficiency of the streamer processing the request is improved, and convenience is provided for the streamer interacting with the user which meets the predetermined condition.

Alternatively, the interaction request includes a first interaction request and a second interaction request, virtual object information corresponding to the first interaction request meets a predetermined condition, virtual object information corresponding to the second interaction request does not meet a predetermined condition, and the first interaction request and the second interaction request have different display priorities and/or different display styles in the request list.

Alternatively, a display priority of the first interaction request is higher than a display priority of the second interaction request, and the apparatus for displaying a request provided in the embodiments of the present disclosure further includes: an adding module configured to add a new interaction request to the request list in response to receiving the new interaction request, the new interaction request being a first interaction request.

Alternatively, the adding module is specifically configured to: add the new interaction request to the request list by keeping an interaction request originally included in the request list unchanged; or delete a target interaction request from the request list, and adding the new interaction request to the request list, the target interaction request being a second interaction request.

Alternatively, the apparatus for displaying a request provided by the embodiments of the present disclosure further includes: a third display module configured to display, on the live streaming interface, first prompt information prompting that there is a first interaction request to be checked, in response to the request list including the first interaction request to be checked. A fourth module is configured to display, on the live streaming interface, second prompt information prompting that there is a second interaction request to be checked, in response to the request list including the second interaction request to be checked but excluding the first interaction request.

Alternatively, the first prompt information is further configured to prompt number information of first interaction requests to be checked.

Alternatively, the apparatus for displaying a request provided by the embodiments of the present disclosure further includes at least one of: a fifth display module configured to before receiving the request display operation of the first user in the live streaming interface, in response to a condition setting operation, display a setting item of the predetermined condition for the first user to set the predetermined condition; and a first setting module configured to before receiving the request display operation of the first user in the live streaming interface, set a display mode of the interaction request in the request list to a target display mode in response to a display mode setting operation, where in the target display mode, the interaction requests received by the first user are displayed separately based on whether virtual object information corresponding to the respective interaction requests meets a predetermined condition.

Alternatively, the setting item includes at least one candidate condition and/or a condition input control, and alternatively, the apparatus for displaying a request provided by the embodiments of the present disclosure further includes at least one of: a second setting module configured to after displaying the setting item of the predetermined condition, in response to a first triggering operation applied to the candidate condition, set the candidate condition to which the first triggering operation is applied as the predetermined condition; and a sixth display module configured to after displaying the setting item of the predetermined condition, display a condition input area for the first user to input the predetermined condition, in response to a second triggering operation applied to the condition input control.

Alternatively, the interaction request is a connection request; and/or the virtual object information is information of virtual objects which have been sent in the live streaming room by a user sending the interaction request, the virtual object information includes a sending number of virtual objects that have been sent, the predetermined condition includes that the sending number of the virtual objects that have been sent corresponding to the interaction request reaches a predetermined number, and the virtual objects that have been sent include a virtual resource and/or a virtual item.

The apparatus for displaying a request described above may perform the method for displaying a request provided by Embodiment one of the present disclosure, and has corresponding functional modules for performing the method and beneficial effects.

FIG. 7 is a schematic structural diagram of an apparatus for sending a virtual object according to an embodiment of the present disclosure.

As shown in FIG. 7, the apparatus includes: a second display module 410 configured to display, in response to a panel display operation of a second user in a live streaming interface, a predetermined panel in the live streaming interface, virtual object information corresponding to an interaction request sent by the second user has not met a predetermined condition, the predetermined panel is configured to display object information of a virtual object to be sent, and the virtual object to be sent is a virtual object to be sent which meets the predetermined condition; and a sending module 420 configured to send the virtual object to be sent, in response to a sending operation being applied on the predetermined panel.

According to the method for sending a virtual object provided by the embodiments of the present disclosure, the predetermined panel is displayed in the live streaming interface through the second display module in response to the panel display operation of the second user in the live streaming interface, the virtual object information corresponding to the interaction request sent by the second user does not meet the predetermined condition, the predetermined panel is configured to display the object information of the virtual object to be sent, and the virtual object to be sent is the virtual object to be sent which meets the predetermined condition; and the virtual object to be sent is sent through the sending module in response to the sending operation applied on the predetermined panel. With the apparatus, the object information of the virtual object to be sent is displayed in the live streaming interface in response to the panel display operation in the live streaming interface of the user that does not meet the predetermined condition corresponding to the live streaming interface, so that the user can achieve the predetermined condition by triggering the sending operation for the virtual object to be sent, and the operation required by the user to achieve the predetermined condition can be simplified.

Alternatively, the panel display operation includes a request sending operation, and the second display module 410 is specifically configured to: send an interaction request to a streamer of the live streaming interface, and display a predetermined panel in the live streaming interface.

Alternatively, the virtual object information includes the sending number of virtual objects that have been sent, and the predetermined condition includes that a number of virtual objects that have been sent corresponding to the interaction request reaches a predetermined number, where the virtual objects that have been sent are virtual resources, the virtual objects to be sent are virtual resources and/or virtual items; or the virtual objects that have been sent and the virtual objects to be sent are virtual items.

The apparatus for sending a virtual object described above may perform the method for sending a virtual object provided by Embodiment two of the present disclosure, and has corresponding functional modules for performing the method and beneficial effects.

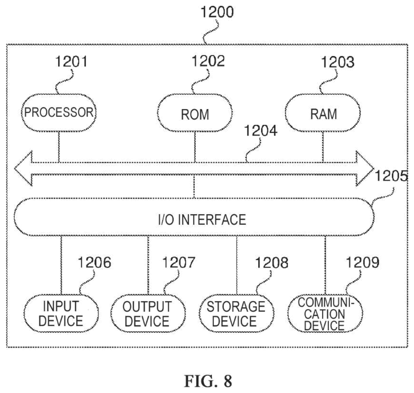

Referring to FIG. 8, FIG. 8 is a schematic structural diagram of an electronic device 1200 suitable for implementing embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), a vehicle-mounted terminal (for example, a vehicle-mounted navigation terminal), and a fixed terminal such as a digital TV, a desktop computer, or the like. The electronic device shown in FIG. 8 is merely an example, and should not cause any limitation on the functions and usage scope of the embodiments of the present disclosure.

As shown in FIG. 8, the electronic device 1200 may include a processor (for example, a central processor, a graphics processor, etc.) 1201, which may perform various appropriate acts and processing according to a program stored in a read-only memory (ROM) 1202 or a program loaded into a random access memory (RAM) 1203 from a storage device 1208. In the RAM 1203, various programs and data required by the operation of the electronic device 1200 are also stored. The processor 1201, the ROM 1202, and the RAM 1203 are connected to each other through a bus 1204. Input/output (I/O) interface 1205 is also connected to the bus 1204.

Generally, the following devices may be connected to the I/O interface 1205: an input device 1206 including, for example, a touch screen, a touchpad, a keyboard, a mouse, a camera, a microphone, an accelerometer, a gyroscope, etc.; an output device 1207 including, for example, a liquid crystal display (LCD), a speaker, a vibrator, etc.; a storage device 1208 including, for example, a magnetic tape, a hard disk, etc.; and a communication device 1209. The communication device 1209 may allow the electronic device 1200 to communicate wirelessly or wired with other devices to exchange data. While FIG. 8 illustrates the electronic device 1200 with various devices, it should be understood that it is not required to implement or have all illustrated devices. More or fewer devices may alternatively be implemented or provided.

In particular, according to embodiments of the present disclosure, the process described above with reference to the flowchart may be implemented as a computer software program. For example, the embodiments of the present disclosure include a computer program product including a computer program embodied on a non-transitory computer readable medium, where the computer program includes program code for performing the method shown in the flowchart. In such embodiments, the computer program may be downloaded and installed from the network through the communication device 1209, or installed from the storage device 1208, or installed from the ROM 1202. When the computer program is executed by the processor 1201, the foregoing functions defined in the method of the embodiments of the present disclosure are performed.

It should be noted that the computer readable medium of the present disclosure described above may be a computer readable signal medium, a computer readable storage medium, or any combination of the foregoing two. The computer readable storage medium may be, for example, but not limited to, an electronic, magnetic, optical, electromagnetic, infrared, or semiconductor system, apparatus, or means, or any combination thereof. More specific examples of computer readable storage media may include, but are not limited to, an electrical connection with one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage means, a magnetic storage means, or any suitable combination of the foregoing. In the present disclosure, a computer readable storage medium may be any tangible medium containing or storing a program that may be used by an instruction execution system, apparatus, or means or may be used in conjunction with an instruction execution system, apparatus, or means. In the present disclosure, a computer readable signal medium may include a data signal propagated in baseband or propagated as part of a carrier, where the computer readable program code is carried. Such a propagated data signal may take a variety of forms including, but not limited to, an electromagnetic signal, an optical signal, or any suitable combination of the foregoing. The computer readable signal medium may also be any computer readable medium other than a computer readable storage medium that may send, propagate, or transmit a program used by an instruction execution system, apparatus, or means or in conjunction with an instruction execution system, apparatus, or means. The program code embodied on the computer readable medium may be transmitted with any suitable medium, including, but not limited to: a wire, an optical cable, RF (radio frequency), and the like, or any suitable combination of the foregoing.

In some embodiments, a client and a server may communicate using any currently known or future developed network protocol, such as HTTP (Hyper Text Transfer Protocol), and may be interconnected with any form or medium of digital data communication (e.g., communication network). Examples of communication networks include local area networks (LANs), wide area networks (WANs), internets (e.g., the Internet), and peer-to-peer networks (e.g., ad hoc peer-to-peer networks), as well as any currently known or future developed networks.

The computer readable medium described above may be included in the electronic device; or may be separately present without being assembled into the electronic device.

The computer readable medium carries one or more programs, and when the one or more programs are executed by the electronic device, causing the electronic device to: receive a request display operation of a first user in a live streaming interface, where the first user is a streamer of a live streaming room corresponding to the live streaming interface; and display, in response to the request display operation and based on whether virtual object information corresponding to a plurality of interaction requests received by the first user meets a predetermined condition, the plurality of interaction requests in a request list respectively. Alternatively, in response to a panel display operation of a second user in a live streaming interface, a predetermined panel is displayed in the live streaming interface, virtual object information corresponding to an interaction request sent by the second user has not met a predetermined condition, the predetermined panel is configured to display object information of a virtual object to be sent, and the virtual object to be sent is a virtual object to be sent which meets the predetermined condition; and send the virtual object to be sent, in response to a sending operation applied on the predetermined panel.

Computer program code for performing the operations of the present disclosure may be written in one or more programming languages or combinations of the programming languages, where the programming languages include, but not limited to, object oriented programming languages such as Java, Smalltalk, C + +, and conventional procedural programming languages, such as the "C" language or similar programming languages. The program code may execute entirely on a user computer, partially on a user computer, as a stand-alone software package, partially on a user computer and partially on a remote computer, or entirely on a remote computer or server. In the case of a remote computer, the remote computer may be connected to the user computer through any kind of network, including a local area network (LAN) or a wide area network (WAN), or the remote computer may be connected to an external computer (e.g., connected through the Internet with an Internet service provider).

The flowcharts and block diagrams in the figures illustrate architectures, functions, and operations of possible implementations of systems, methods, and computer program products according to various embodiments of the present disclosure. In this regard, each block in the flowcharts or block diagrams may represent a module, program segment, or portion of code that includes one or more executable instructions for implementing the specified logical function. It should also be noted that in some alternative implementations, the functions noted in the blocks may also occur in a different order than the order illustrated in the figures. For example, two consecutively represented blocks may actually be performed substantially in parallel, which may sometimes be performed in a reverse order, depending on the function involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software, or may be implemented in hardware. The name of the module does not constitute a limitation on the unit itself in certain cases.

The functions described above may be performed, at least in part, by one or more hardware logic components. For example, without limitation, example types of the hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program used by an instruction execution system, apparatus, or device or used in conjunction with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of machine-readable storage media may include an electrical connection based on one or more lines, a portable computer diskette, a hard disk, a random access memory (RAM), a read-only memory (ROM), an erasable programmable read-only memory (EPROM or flash memory), an optical fiber, a portable compact disc read-only memory (CD-ROM), an optical storage devices, a magnetic storage devices, or any suitable combination of the foregoing.

According to one or more embodiments of the present disclosure, Example 1 provides a method for displaying a request, including: receiving a request display operation of a first user in a live streaming interface, the first user being a streamer of a live streaming room corresponding to the live streaming interface; displaying, in response to the request display operation and based on whether virtual object information corresponding to a plurality of interaction requests received by the first user meets a predetermined condition, the plurality of interaction requests in a request list respectively.

According to one or more embodiments of the present disclosure, Example 2 according to the method of Example 1, the interaction request includes a first interaction request and a second interaction request, virtual object information corresponding to the first interaction request meets a predetermined condition, virtual object information corresponding to the second interaction request does not meet a predetermined condition, and the first interaction request and the second interaction request have different display priorities and/or different display styles in the request list.

According to one or more embodiments of the present disclosure, Example 3 according to the method of Example 2, a display priority of the first interaction request is higher than a display priority of the second interaction request, and the method further includes: adding a new interaction request to the request list in response to receiving the new interaction request, the new interaction request being a first interaction request.

According to one or more embodiments of the present disclosure, Example 4 according to the method of Example 3, adding the new interaction request to the request list includes: adding the new interaction request to the request list by keeping an interaction request originally included in the request list unchanged; or deleting a target interaction request from the request list, and adding the new interaction request to the request list, the target interaction request being a second interaction request.

According to one or more embodiments of the present disclosure, Example 5 according to the method of Example 2, further includes: displaying, on the live streaming interface, first prompt information prompting that there is a first interaction request to be checked, in response to the request list including the first interaction request to be checked; and displaying, on the live streaming interface, second prompt information prompting that there is a second interaction request to be checked, in response to the request list including the second interaction request to be checked but excluding the first interaction request.

According to one or more embodiments of the present disclosure, Example 6 according to the method of Example 5, the first prompt information is further configured to prompt number information of first interaction requests to be checked.

According to one or more embodiments of the present disclosure, Example 7 according to the method of Example 1, before receiving a list display operation of the first user in the live streaming interface, further includes at least one of: displaying, in response to a condition setting operation, a setting item of the predetermined condition for the first user to set the predetermined condition; setting, in response to a display mode setting operation, a display mode of the interaction request in the request list to a target display mode, where in the target display mode, the interaction requests received by the first user are displayed separately based on whether virtual object information corresponding to the respective interaction requests meets a predetermined condition.

According to one or more embodiments of the present disclosure, Example 8 according to the method of Example 7, the setting item includes at least one candidate condition and/or a condition input control, and after displaying the setting item of the predetermined condition, the method further includes at least one of: setting, in response to a first triggering operation applied to the candidate condition, the candidate condition to which the first triggering operation is applied as the predetermined condition; and displaying a condition input area for the first user to input the predetermined condition, in response to a second triggering operation applied to the condition input control.

According to one or more embodiments of the present disclosure, Example 9 according to any of the method of Examples 1 to 8, the interaction request is a connection request; and/or the virtual object information is information of virtual objects which have been sent in the live streaming room by a user sending the interaction request, the virtual object information includes a sending number of virtual objects that have been sent, the predetermined condition includes that the sending number of the virtual objects that have been sent corresponding to the interaction request reaches a predetermined number, and the virtual objects that have been sent include a virtual resource and/or a virtual item.

According to one or more embodiments of the present disclosure, Example 10 provides a method for sending a virtual object, including: displaying, in response to a panel display operation of a second user in a live streaming interface, a predetermined panel in the live streaming interface, virtual object information corresponding to an interaction request sent by the second user not meeting a predetermined condition, the predetermined panel being configured to display object information of a virtual object to be sent, and the virtual object to be sent being a virtual object to be sent which meets the predetermined condition; and sending the virtual object to be sent, in response to a sending operation applied on the predetermined panel.

According to one or more embodiments of the present disclosure, Example 11 according to the method of Example 10, the panel display operation includes a request sending operation, and displaying the predetermined panel in the live streaming interface includes: sending an interaction request to a streamer of the live streaming interface, and displaying a predetermined panel in the live streaming interface.

According to one or more embodiments of the present disclosure, Example 12 according to the method of Example 10, the virtual object information includes a sending number of virtual objects that have been sent, and the predetermined condition includes that a number of the virtual objects that have been sent corresponding to the interaction request reaches a predetermined number, where the virtual objects that have been sent are virtual resources, the virtual objects to be sent are virtual resources and/or virtual items; or the virtual objects that have been sent and the virtual objects to be sent are virtual items.

According to one or more embodiments of the present disclosure, Example 13 provides an apparatus for displaying a request, including: a receiving module configured to receive a request display operation of a first user in a live streaming interface, the first user being a streamer of a live streaming room corresponding to the live streaming interface; and a first display module configured to display, in response to the request display operation and based on whether virtual object information corresponding to a plurality of interaction requests received by the first user meets a predetermined condition, the plurality of interaction requests in a request list respectively.

According to one or more embodiments of the present disclosure, Example 14 provides an apparatus for sending a virtual object, including: a second display module configured to display, in response to a panel display operation of a second user in a live streaming interface, a predetermined panel in the live streaming interface, virtual object information corresponding to an interaction request sent by the second user not meeting a predetermined condition, the predetermined panel being configured to display object information of a virtual object to be sent, and the virtual object to be sent being a virtual object to be sent which meets the predetermined condition; and a sending module configured to send the virtual object to be sent, in response to a sending operation being applied on the predetermined panel.

According to one or more embodiments of the present disclosure, Example 15 provides an electronic device, including: one or more processors; a memory, configured to store one or more programs, where the one or more programs, when executed by the one or more processor, cause the one or more processors to implement the method for displaying a request of any of Examples 1 to 9 or the method for sending a virtual object of any of Examples 10 to 12.

According to one or more embodiments of the present disclosure, Example 16 provides a computer-readable storage medium having a computer program stored thereon, where the program, when executed by a processor, implements the method for displaying a request of any of Examples 1 to 9 or the method for sending a virtual object of any of Examples 10 to 12.

According to one or more embodiments of the present disclosure, Example 17 provides a computer program product, where the computer program product, when executed by a computer, causes the computer to implement the method for displaying a request of any of Examples 1 to 9 or the method for sending a virtual object of any of Examples 10 to 12.

The above description is merely an illustration of preferred embodiments of the present disclosure and the principles of the applied technology. It should be understood by those skilled in the art that the disclosure scope in the present disclosure is not limited to a technical solution of a specific combination of the above technical features, and should also cover other technical solutions formed by any combination of the above technical features or their equivalent features without departing from the above disclosed concept. For example, a technical solution formed by mutually replacing the above features with the technical features with similar functions disclosed in the present disclosure (but not limited to).

Further, while operations are depicted in a particular order, this should not be understood to require that these operations are performed in the particular order shown or in a sequential order. In certain circumstances, multitasking and parallel processing may be advantageous. Likewise, while several specific implementation details are included in the discussion above, these should not be construed as limiting the scope of the present disclosure. Certain features described in the context of individual embodiments may also be implemented in combination in a single embodiment. Conversely, the various features described in the context of a single embodiment may also be implemented in a plurality of embodiments either individually or in any suitable subcombination.

Although the present subject matter has been described in a language specific to structural features and/or methodological acts, it is to be understood that the subject matter defined in the appended claims is not necessarily limited to the specific features or acts described above. Rather, the specific features and acts described above are merely an example form of implementing the claims.

## Claims

1. A method for displaying a request, comprising:
receiving a request display operation of a first user in a live streaming interface, the first user being a streamer of a live streaming room corresponding to the live streaming interface; and
displaying, in response to the request display operation and based on whether virtual object information corresponding to a plurality of interaction requests received by the first user meets a predetermined condition, the plurality of interaction requests in a request list respectively.

2. The method of claim 1, wherein the plurality of interaction requests comprise a first interaction request and a second interaction request, virtual object information corresponding to the first interaction request meets a predetermined condition, virtual object information corresponding to the second interaction request does not meet a predetermined condition, and the first interaction request and the second interaction request have different display priorities and/or different display styles in the request list.

3. The method of claim 2, wherein a display priority of the first interaction request is higher than a display priority of the second interaction request, and the method further comprises:
adding a new interaction request to the request list in response to receiving the new interaction request, the new interaction request being a first interaction request.

4. The method of claim 3, wherein adding the new interaction request to the request list comprises:
adding the new interaction request to the request list by keeping an interaction request originally comprised in the request list unchanged; or
deleting a target interaction request from the request list, and adding the new interaction request to the request list, the target interaction request being a second interaction request.

5. The method of claim 2, further comprising:
displaying, on the live streaming interface, first prompt information prompting that there is a first interaction request to be checked, in response to the request list comprising the first interaction request to be checked; and
displaying, on the live streaming interface, second prompt information prompting that there is a second interaction request to be checked, in response to the request list comprising the second interaction request to be checked but excluding the first interaction request.

6. The method of claim 5, wherein the first prompt information is further configured to prompt number information of first interaction requests to be checked.

7. The method of claim 1, wherein before receiving the request display operation of the first user in the live streaming interface, the method further comprises at least one of:
displaying, in response to a condition setting operation, a setting item of the predetermined condition for the first user to set the predetermined condition; and
setting, in response to a display mode setting operation, a display mode of the interaction request in the request list to a target display mode, wherein in the target display mode, the interaction requests received by the first user are displayed separately based on whether virtual object information corresponding to the respective interaction requests meets a predetermined condition.

8. The method of claim 7, wherein the setting item comprises at least one candidate condition and/or a condition input control, and after displaying the setting item of the predetermined condition, the method further comprises at least one of:
setting, in response to a first triggering operation applied to the candidate condition, the candidate condition to which the first triggering operation is applied as the predetermined condition; and
displaying a condition input area for the first user to input the predetermined condition, in response to a second triggering operation applied to the condition input control.

9. The method of any of claims 1 to 8, wherein the interaction request is a connection request; and/or the virtual object information is information of virtual objects which have been sent in the live streaming room by a user sending the interaction request, the virtual object information comprises a sending number of virtual objects that have been sent, the predetermined condition comprises that the sending number of the virtual objects that have been sent corresponding to the interaction request reaches a predetermined number, and the virtual objects that have been sent comprise a virtual resource and/or a virtual item.

10. A method for sending a virtual object, comprising :
displaying, in response to a panel display operation of a second user in a live streaming interface, a predetermined panel in the live streaming interface, virtual object information corresponding to an interaction request sent by the second user not meeting a predetermined condition, the predetermined panel being configured to display object information of a virtual object to be sent, and the virtual object to be sent being a virtual object to be sent which meets the predetermined condition; and
sending the virtual object to be sent, in response to a sending operation applied on the predetermined panel.

11. The method of claim 10, wherein the panel display operation comprises a request sending operation, and displaying the predetermined panel in the live streaming interface comprises:
sending an interaction request to a streamer of the live streaming interface, and displaying a predetermined panel in the live streaming interface.

12. The method of claim 10, wherein the virtual object information comprises the number of virtual objects, the predetermined condition comprises that a sending number of the virtual objects that have been sent corresponding to the interaction request reaches a predetermined number, wherein the virtual objects that have been sent are virtual resources, the virtual objects to be sent are virtual resources and/or virtual items; or the virtual objects that have been sent and the virtual objects to be sent are virtual items.

13. An apparatus for displaying a request, comprising :
a receiving module configured to receive a request display operation of a first user in a live streaming interface, the first user being a streamer of a live streaming room corresponding to the live streaming interface; and
a first display module configured to display, in response to the request display operation and based on whether virtual object information corresponding to a plurality of interaction requests received by the first user meets a predetermined condition, the plurality of interaction requests in a request list respectively.

14. An apparatus for sending a virtual object, comprising :
a second display module configured to display, in response to a panel display operation of a second user in a live streaming interface, a predetermined panel in the live streaming interface, virtual object information corresponding to an interaction request sent by the second user not meeting a predetermined condition, the predetermined panel being configured to display object information of a virtual object to be sent, and the virtual object to be sent being a virtual object to be sent which meets the predetermined condition; and
a sending module configured to send the virtual object to be sent, in response to a sending operation being applied on the predetermined panel.

15. An electronic device, comprising:
at least one processor; and
a memory communicatively connected to the at least one processor; wherein
the memory stores a computer program executable by the at least one processor, and the computer program is executed by the at least one processor causing the at least one processor to perform the method for displaying a request of any of claims 1 to 9 or the method for sending a virtual object of any of claims 10 to 12.

16. A non-transitory computer-readable storage medium storing computer instructions, wherein the computer instructions, when executed by a processor, implements the method for displaying a request of any of claims 1 to 9 or the method for sending a virtual object of any of claims 10 to 12.

17. A computer program product comprising a computer program, wherein the computer program, when executed by a processor, implements the method for displaying a request of any of claims 1 to 9 or the method for sending a virtual object of any of claims 10 to 12.
